# EUROPEAN PATENT SPECIFICATION

(11) **EP 0 389 013 B1**
(45) Date of publication and mention of the grant of the patent: **23.07.1997**
(21) Application number: 90200381.3
(22) Date of filing: 20.02.1990
(51) Int. Cl.: A01K 1/12, A01K 1/015

(54) **An accomodation for a number of animals, dairy animals in particular**
Unterbringungsbox für eine Anzahl von Tieren, insbesondere Milchvieh
Box pour plusieurs animaux, particulièrement pour vaches laitières

(30) Priority: 21.02.1989 NL 8900415
(43) Date of publication of application: 26.09.1990
(73) Proprietor: C. van der Lely N.V., NL-3155 PD Maasland (NL)
(72) Inventor: Van der Lely, Ary, NL-3155 PD Maasland (NL); Van der Lely, Cornelis, Zug (CH); Bom, Cornelis Johannes Gerardus, NL-3181 VC Rozenburg (NL); Van den Berg, Karel, NL-2971 BR Bleskensgraaf (NL)
(74) Representative: Mulder, Herman

(56) References cited:
- EP-A- 189 954
- EP-A- 0 270 165
- DE-U- 8 302 429
- US-A- 4 011 837

## Description

The invention relates to an accommodation for dairy animals such as cows, comprising a closet type of device with an automatic milking apparatus and a feeding system, said closet type of device being connected to a storage place for storing droppings of animals, said storage place being provided near the accommodation, the closet type of device having a floor, the rear part of which being structured as a grid floor, the closet type of device further being provided with an automatic cleaning device comprising a washing device for cleaning the place of the closet type of device where the droppings are deposited. In the following, this place is also indicated as "depositing area".

In accommodations for dairy animals, such as an open or closed loose house, the floor is covered in the usual manner with a layer of straw so as to provide the opportunity for the animals to lie down on a somewhat insulating floor covering. However, the animals regularly deposit their droppings randomly, so that not only the straw but, after an animal has lain down, also the udder is contaminated to a significant extent. Prior to the milking procedure, the udder of each animal must be cleaned, while further the stable floor must be cleaned very regularly and the contaminated straw be removed and discharged to a dung storage place. This is a very laborious, time-consuming and hence expensive operation, while the hygiene is not ensured after all.

To solve these contamination problems, it is already proposed to provide the accommodation with a closet type of device, which is connected to a storage place for storing droppings of animals, said storage place being provided near the accommodation; see EP-A 0 270 165. The latter patent application describes an accommodation wherein the droppings deposited therein are collected in a bin under a grid floor and discharged to the storage place by means of worm wheels. Furthermore, the known accommodation is provided with means for cleaning and rinsing the accommodation and/or the dairy animals.

The purpose of the invention is to realise an efficient way of cleaning the animal's udder as well as the place of the closet type of device where the droppings are deposited.

Therefore, according to the invention, the washing device is designed in the form of sprinklers or showers which are electronically controlled and located at a side of the closet type of device and at such a level that water sprinkled during operation of the washing device is directed obliquely rearwardly towards the udder and also towards the rear part of the floor of the closet type of device where the droppings are deposited, i.e. the depositing area. The accommodation may be provided with sensor means to establish whether the animal has deposited its droppings, whereas the washing device is rinsing the place where the droppings are deposited in response to signals from the sensor means indicating that the animal has deposited its droppings.

In accordance with another feature of the invention, the closet type of device is arranged in such a way that various animals can visit the closet type of device one after another. Therefore, in a specific embodiment, the closet type of device is provided with a door through which the animals can enter the closet type of device with another door through which the animal can leave the closet type of device.

The closet type of device is provided with an automatic milking apparatus and a feeding system. During automatically milking an animal, fodder may be supplied to the animal while, for example before milking takes place, the animal is given the opportunity to deposit its droppings in the depositing area, possibly encouraged by the supply of fodder or otherwise.

For a better understanding of the invention and to show how the same may be carried into effect, reference will now be made, by way of example, to the accompanying drawings, in which:
Figure 1 is a plan view of a stable or accommodation according to the invention;
Figure 2 is a plan view of a the closet type of device, which device is also used as a milking parlour and a feeding station;
Figures 3 and 4 show a side view of the closet type of device of Figure 2;
Figure 5 shows, seen in side view, means attached to an animal for inducing same to deposit its droppings in a closet type of device.

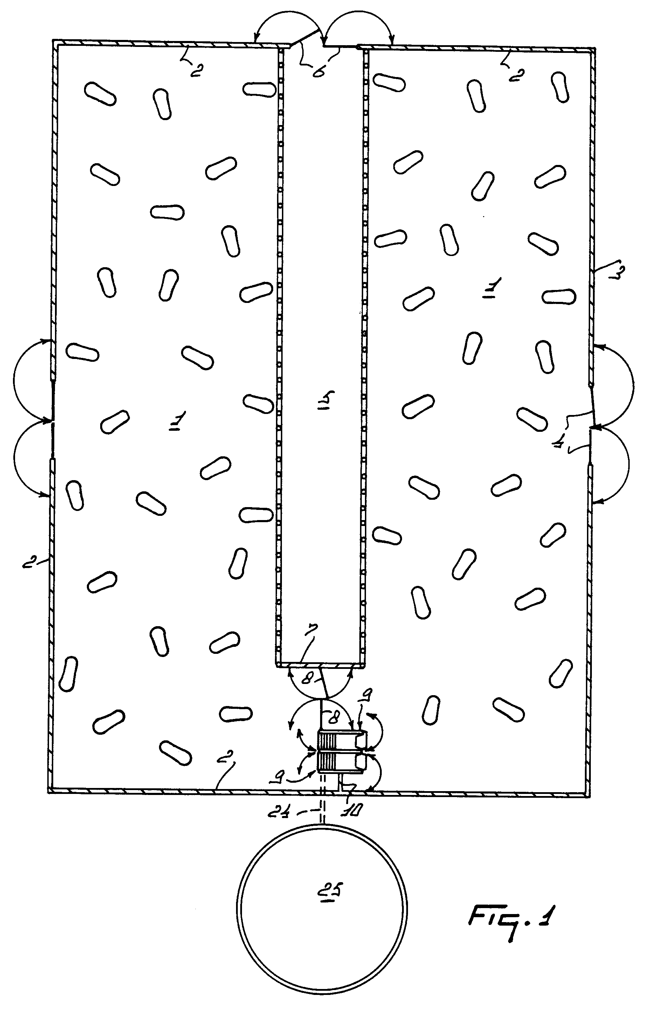

The plan view of Figure 1 concerns a stable or accommodation for dairy animals, i.e. animals whose milk is used for human consumption, e.g. dairy cows. The accommodation is denoted by the reference numeral 1 and is enclosed completely or partly by a number of walls 2 and 3 and a roof. In this embodiment, the wall 3 includes a pair of doors 4, through which the animals can be brought inside into the accommodation or outside into the open air. In this case, the accommodation is a closed loose house, in which the animals can move about freely in the room 1. However, the invention also relates to an open loose house, in which e.g. the wall 3 is lacking completely, so that the animals can move freely in and out from a passage way located next to the stable. In the embodiment shown, in the centre of the smallest dimension of the stable there is arranged a feeding passage 5 which extends through part of the largest dimension of the stable and is separated from the room 1 located on either side thereof by vertical gratings or the like, through which the animals can pass their heads in order to obtain fodder therefrom. The feeding passage is accessible from the outside via stable doors 6. The feeding passage end remote from the stable doors 6 is constituted by a wall 7 of equal width as the feeding passage. Two low hinging doors 8 are contiguous to the centre of the wall 7, which doors can be opened by the animals themselves, so that they can freely move from one room 1 into the other. Two closet type of devices 9 are contiguous to the boundary of the hinging doors 8 that is remote from the feeding passage 5, the largest dimension of each of these closet type of devices extending in this embodiment parallel to the shortest bounding wall 2 of the stable. Between the boundary of the closet type of device 9 remote from the feeding passage 5 and closest to a bounding wall 2 and this bounding wall there is some clearance. This clearance is bridged by a short wall 10, the length of which is approximately equal to the width of each of the closet type of devices 9.

In prior art accommodations or stables of the type shown in Figure 1 (however, with the exception of the closet type of devices areas 9 which, as will be described in greater detail hereinafter, form part of the invention), in which the dairy cows can walk around freely, the floor is preferably provided with an insulating layer, e.g. a layer of straw. The cows can lie down and rest on this layer of straw. Since the animals can walk about freely, their droppings are deposited in random places in the stable, which causes a considerable contamination thereof. It may happen that the cow lies down on the excrements (i.e. the more or less solid droppings and the urine), so that in particular the cow's udder will be contaminated. As the cows are to be milked, at least this portion of each cow must be cleaned; if each udder is to be cleaned very thoroughly, the time required therefor is quite considerable, partly because of the fact that the quantity of clean water required for each animal individually is not directly available in a loose house. Moreover, this water flows at random through the loose house, which still further increases the contamination of the stable, in particular when dung is removed therefrom. All these matters together render the milking and cleaning of the stable a laborious and time-consuming operation.

For a hygienic and advantageous milk production it is desirable that:
a) the dairy animals should be optimally clean in order to prevent bacteria contained in their droppings from reaching the milk intended for human consumption;
b) the dairy animal can lie down comfortably on an insulating layer of e.g. dry and clean straw, so that it will be able to produce a maximum quantity of milk in warm and favourable conditions even during periods of cold;
c) the dairy animals can move about in their stable or accommodation, e.g. an open or closed loose house, so that their blood circulation and milk yield are promoted.

In order to obviate the above-mentioned disadvantages and to satisfy said hygienic and other conditions for an appropriate milk yield, the accommodation of the animals is provided with at least one closet type of device, which in Figure 1 is denoted by the reference numeral 9.

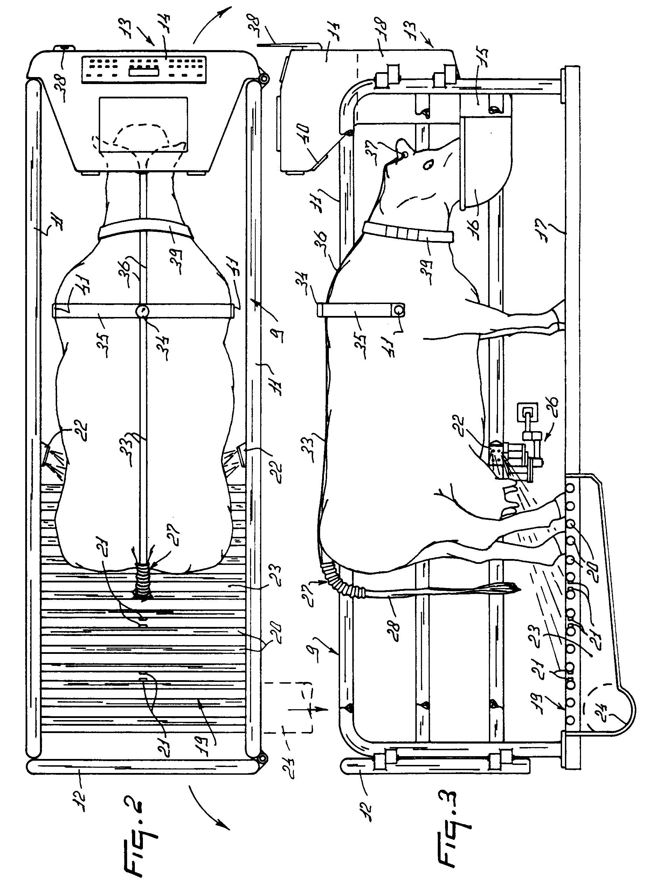

Each closet type of device 9 as shown in the embodiment of Figures 2 to 4 is bounded at its two longitudinal sides by a railing or grating 11, which two are arranged parallel to each other and at a relative interspace that slightly exceeds the width of the type of dairy animal moving about in the stable or accommodation. The closet type of device 9 has an entrance which is closable by means of a door 12 and, at its other end, an exit which is closable by means of a door 13. The two doors 12 and 13 are hingeable about associated vertical hinges which are connected to one of the lateral bounds of the closet type of device; the doors are hingeable in a direction as indicated by arrows in Figure 1. The entrance doors 12 are hingeable through an angle of approximate 90° and the exit doors 13 through an angle of 180°.

The entrance door 12 is a flat door which can be made of any desired material. The exit door 13 comprises equipment to play an important part in the implementation of the inventive idea. The upper part of the door 13 comprises a compartment or housing accommodating a partly electronic, partly electrical installation 14, and also, near the bottom side of the housing for the installation 14, a feeding system 15 for filling a trough 16 which is within the reach of an animal present in the closet type of device 9. The trough 16 is arranged above the floor 17 of the closet type of device 9 at a height which is advantageous for the animal. The feeding system 15 effects the supply of relatively small quantities of fodder which is very tasty for the relevant type of dairy animal. The trough 16 is filled from a fodder storage room 18. The room 18 is accommodated in a continuation of the housing for the electrical installation 14, but is of course separated from said installation by a tight partition.

The largest dimension of the space within the closet type of device 9 exceeds the length of a full-grown dairy animal present in the closet type of device 9 by approximately 20 to 40 percent.

The doors 12 and 13 form locking means for the closet type of device. This locking means can be controlled electrically or electronically. In general, they form means to retain an animal temporarily in the closet type of device. As an alternative, the locking means may include rods, at least one of which is adjustable; these rods can be brought at both sides of the neck of an animal to hold the animal in a practically fixed position in the closet type of device. The retaining means may include a control member to release the locking means after the droppings have been deposited.

Near the rear end of an animal present in the closet type of device 9, the floor 17 is structured as a grid floor 19 in the form of a plurality of rods 20 extending transversely to the longitudinal direction of the closet type of device 9 and intended to allow to pass the droppings of an animal present on the grid. This part of the floor 17 forms the depositing area or the place of the closet type of device where the droppings have to be deposited. Near the grating there are provided cleaning means to rinse the depositing area and the grating in particular. Furthermore the closet type of device is provided with means, preferably electronic means, to establish the fact whether an animal has deposited its droppings or not. At least two adjacent, parallel rods 20 are provided with sensors or contacts 21. The sensors or contacts 21, provided in pairs, are so arranged against the adjacent rods that they face each other, and are connected to the associated rods in a position located below the upper sides thereof. The sensors 21 are connected via (non-shown) cables to the electronic installation 14 near the front side of the animal present in the closet type of device 9.

As an alternative, the electronic means to establish the fact whether an animal has deposited its droppings or not may include a sensor, preferably an infrared one, attached in a collector element or gutter for collecting droppings. This collector element or gutter may be placed under the grating in the floor. In this alternative, it is of great advantage that ammonia binding material supply means may be provided to supply ammonia binding material in the collector element or gutter after the droppings have been deposited. This ammonia binding material is commercially available; the use of this material is highly important from an ecological point of view.

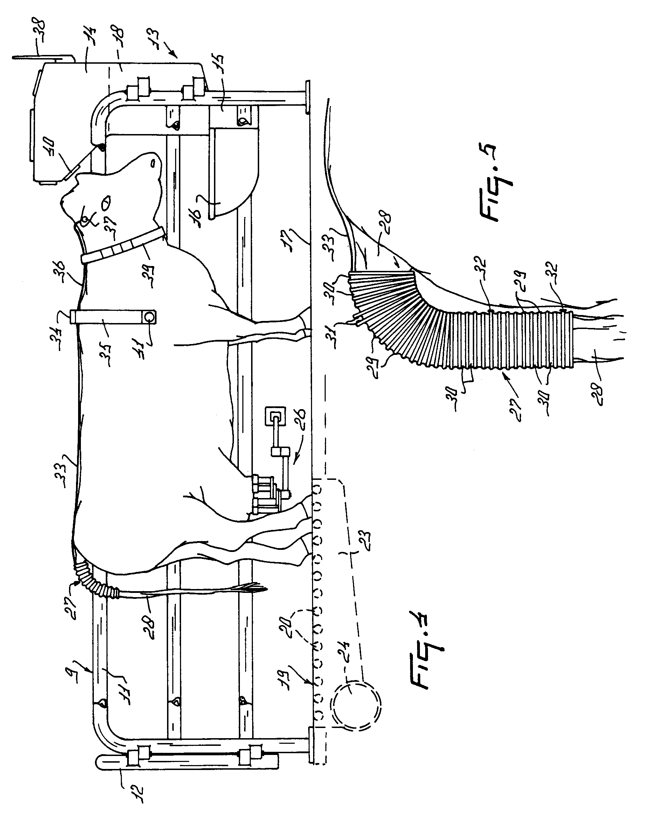

As is apparent from Figures 2 and 3, against each of the lateral bounds 11 there is arranged a washing device 22 which is designed in the form of sprinklers or showers. Seen in the side view of Figure 3, each washing system 22 is located at the level of the udder of an animal present in the depositing area or, taken in the direction of the exit door 13, at a short distance in front of the position of the udder. The washing device 22 is arranged such that the water sprinkled during operation of this system is directed obliquely rearwardly towards the udder and also towards the grid floor 19. So, the washing device for the animal, specifically for the udder of the animal, is the same as the cleaning device for the closet type of device.

Below the grid floor 19 there is positioned a collecting bin 23 for collecting the droppings and the water used.

The bin 23 has a sloping bottom, so that the droppings and the water used can be discharged to a discharge pipe 24, which pipe is passed through under the nearby wall 2 and ends in a storage place or dung pit or slurry pit 25 arranged in the bottom. The pit 25 is accessible from above so as to allow the collected dung to be pumped into e.g. a slurry tank or similar drivable dung container.

As is apparent from Figure 4, the closet type of device 9 is also provided with an automatic milking implement 26, which implement is connected pivotably to one of the lateral boundaries 11 of the closet type of device and can be operated in such a way by means of the electronic installation 14 that it can be connected automatically to the teats of the udder of an animal present in the closet type of device, the milk being discharged in a (non-shown) manner to a milk storage container.

Consequently, the closet type of device 9 is arranged as a location where a dairy animal can deposit its droppings, as a washing station for cleaning at least the animal's udder, i.e. to keep the animal clean, as a milking parlour for automatically milking an animal present therein and as a feeding station for feeding this animal. The depositing area for the deposition of droppings, in combination with the cleaning device, constitutes a closet type of device which can be used by several animals present in the accommodation 1.

It is a feature of the inventive idea either to discourage animals present in the accommodation 1 to deposit their droppings thereinside (i.e. outside the closet type of device 9), or to induce them to deposit their droppings in the closet type of device. This can be achieved in different manners, inter alia by luring the animals to the closet type of device 9.

A method of discouraging an animal present in the accommodation 1 of dropping its droppings then and there includes the application of a suitable device to the animal itself. This device comprises a flexible tube 27 to be arranged around the tail 28 of each of the animals (Figure 5). The flexible tube 27 is pushed as far as possible to the upper side of the tail 28 and has a length which is such that, when the animal lets its tail hang, it extends in the downward direction to below the position where the droppings leave the animal. The tube 27 is provided with a plurality of relatively stiff rings or ribs 29 which are relatively closely interspaced and are interconnected by relatively thin, flexible connection members 30 which, in the stretched position of the tube, are in the form of short cylinders and on both sides and all around are contiguous to the rings 29. At a short distance from the upper end of the tube pushed around the tail there are applied on two adjacent rings 29 facing sensors or contacts 31. The sensors 31 are provided on the farthest outwardly and upwardly located portions of the two adjacent rings 29, when the tail is in the position as shown in Figure 5. On the lower end of the tube 27, taken in the downward position of the tail 28 shown in Figure 5, sensors 32 are applied on one or on a plurality of rings 29, i.e. in a location at the periphery of a ring 29 which, in the position shown in the drawing, is directed towards the cow's body, but below the position where the excrements leave the body. By means of the thin, flexible electrical connection wires 33 shown in Figures 2 to 4, which are passed along the upper side of the animal to the front and are secured to the animal's body, the sensors 31 and 32 are connected to a member 34 (Figure 2) which is arranged on the highest point of a belt 35 hung in the transverse direction on the animal's body. From the member 34 further connecting wires 36 are passed over and secured to the upper side of the body and the neck of the animal, which wires terminate in small loudspeakers 37 (Figures 3 and 4) which are attached to or near the animal's ears on its head.

The member 34 includes a small battery or an other type of energy source and a compact electronic circuit, a portion of which is designed as a simple radio signal receiver.

If, in accordance with a first method of discouraging the animal to deposit its droppings in the accommodation 1, the animal moves its tail upwards, the flexible tube 27 is stretched, so that the contacts 31 contact each other. This causes a signal to be conveyed to the member 34 via the connecting wires 33, whereby the circuit accommodated in the member 34 is energized and via the connection wires 36 in the loudspeakers 37 there is produced a sound which is unpleasant to the animal (e.g. a squeaking or whistling one), which sound reaches the animal's ears via the loudspeakers 37. When an animal, which is in the accommodation 1 for the first time and has been provided with the means described in the foregoing, has experienced this unpleasant effect for a number of times, has observed where other animals accustomed to stay in the accommodation can deposit their droppings and has been guided one or several times to the closet type of device by a person present, it knows in which direction to go when the disagreeable sound is received. Especially when the animal is aware that the unpleasant sound will disappear in the closet type of device, after some experience it will go without any further incentives to the closet type of device with the object of depositing its droppings there.

For, as soon as the animal enters the closet type of device 9, it comes within the range of the signal transmitted by a radio transmitter present in the electronic installation 14 of the closet type of device 9 (aerial 38 in Figures 2 to 4). The signal transmitted by this radio apparatus via the aerial 38 is comparatively weak and is radiated substantially within the confines of the closet type of device 9. The receiver present inside the member 34 provided on the animal includes an AND-gate which is controlled by this radio signal and whose bias has been adjusted to such a threshold value that it does not change state until after the animal has entered the closet type of device 9. The switched AND-gate now interrupts the squeaking or whistling sound produced by the member 34, which sound was initiated by the closing contacts 31. Thus, after some experience the animal present in the accommodation 1 and causing the contacts 31 to close will go to the closet type of device 9, since it knows that the disagreeable sound in its ears will disappear in that area. The animal encouraged thus to enter the closet type of device 9 also knows that the trough 16 is located there as well as that, if it deposits its droppings there, it will be offered a quantity of fodder.

For, when the animal, standing in the closet type of device 9, deposits its droppings on the grid floor 19, these droppings close a pair of contacts 21 of the grid floor 19, whereby there is applied to the electronic apparatus 14 a signal which energizes a control system forming part of the apparatus 14, which control system causes a dosed quantity of fodder to fall from the storage room 18 into the trough 16. After some experience, the animal will also know that, if it fails to deposit its droppings on the grid floor 19, the trough 16 remains empty and the exit door 13 remains closed.

Inside the electronic system 14, the signal produced by the sensors 21 as to the passage of droppings can be combined with a signal derived from a cow identification collar 39 to record the fact that the relevant animal (a data from the collar 39) has indeed deposited its droppings on the grid floor 19 of the closet type of device 9. Thus, it can be established which animals still are insufficiently experienced to make use of the closet type of device 9.

After an animal has deposited its droppings on the grid floor 19 in the closet type of device 9 and the relevant signal has been established by the electronic system 14, not only fodder is conveyed to the trough 16 but also, after a short period of time determined by a clock or a time measuring system, the cleaning device 22 is made operative, by means of which, preferably from two sides, the udder is cleaned by spraying with preferably tepid or slightly warm washing water. The obliquely rearwardly and inwardly sprayed washing water is directed such that also the remnants of the droppings on the grid floor are washed down into the receptable 23. After a period of time determined by the time measuring system, the automatic milking implement 26 is pivoted inwardly towards the udder and is connected automatically to the teats, so that the closet type of device 9 also serves as a milking parlour.

Once the sequential washing and milking procedures have ended, the electronic system 14, after the end of the milking procedure has been signalized, triggers a control system which causes the door 13 to open through 180°, so that the animal will be able to walk to the accommodation 1.

It should be noted that a further luring means can be used by providing the system 14 with a loudspeaker 40 which, optionally, can produce continuously sounds that are agreeable to the animals and are audible in the entire accommodation 1.

The belt 35 (Figures 2 to 4), which hangs down across the back of the animals on both sides to approximately halfway, is provided at its lowermost ends with an element 41 which is connected to the member 34 via electric connecting wires. The elements 41 are fitted with electrodes or the like, by means of which the animal can be subjected to slight electric shocks, similar to those provided by known cattle goads. These shocks require comparatively little energy. The elements 41 can be fed from the energy source accommodated in the member 34. Taken in the longitudinal direction of the animal, a second belt may be arranged in a different position on the back, which belt is also provided with elements 41 to be fed from an associated, further energy source.

The elements 41 constitute the basis for a further method of having the animal move towards the closet type of device 9. This method also includes a radio apparatus connected to the closet type of device 9 and transmitting comparatively strong signals into the accommodation 1. The member 34 may include a receiving system for the said last signals, which system is provided with detection means for detecting the direction from which the signals are received. As soon as the animal's tail moves upwardly and the contacts 31 close, the signal supplied by these contacts renders the receiving system present in the member operative, which causes an element 41 to apply slight shocks to that side of the animal which is remote from the radio signal source (near the closet type of device 9). The animal experiences these shocks as unpleasant and is induced to move into the direction away from the shocks, so that it will go towards the radio signals, i.e. towards the closet type of device 9. When, for some reason or other the animal might turn round, the elements 41 arranged at the other side of the animal will produce shocks, so that the animal will move towards the closet type of device again. Thus, the animal's direction of movement is determined. This goading implement may be of such a structure that, when the animal goes in the proper direction, no shocks occur. After some experience, the animal will move towards the closet type of device 9 upon lifting its tail.

In this method it is alternatively possible for the belt 35 to be provided with a small, gimballed compass, in which the deflection of the compass needle is limited by contacts, by means of which, after activation by the contacts 31 and the compass needle, there are produced shocks at a side of the animal, thereby driving same towards the closet type of device 9. These goading systems in accordance with the second method may be combined with a sound source which produces sounds that are agreeable to the animals and which is attached to the closet type of device 9.

In accordance with a further method, the closet type of device 9 is produced with a call system which, after regular time intervals, produces sounds that are agreeable to the animals. These sounds may correspond to sounds which imitate the sound of fodder dropping in a trough and/or of falling water, in which latter case thirsty animals will be lured.

A further method of obviating contamination of the stable and of keeping the animals clean is performed by the sensors 32 which, in response to the fact that the animal has lain down in droppings or in response to the droppings produced by the standing animal, activate the member 34 and the loudspeakers 37, as a result of which the animal will move towards the closet type of device 9.

The afore-mentioned methods may, of course, be combined in part or as a whole, thereby either discouraging the animals to deposit their droppings inside the accommodation 1 or encouraging them to deposit their droppings inside the closet type of device 9, and/or forcing and/or luring them towards the closet type of device 9. After some habituation and experience, i.e. by observing the behaviour of other animals or by having been guided towards the closet type of device during the initial stage of their stay in the accommodation, the animals will be brought to a certain automatic behaviour of regularly utilizing the closet type of device by these methods, both separately and in combination. Once the animal has arrived in the closet type of device 9, the sequence of actions an occurrences (depositing of droppings, recording with the aid of the cow identification collar, feeding, washing an milking) are performed in the order as described in the foregoing. As soon as the electronic system 14 receives the signal defining the end of the milking operation, the electronic system 14 triggers the control system that opens the door 13, while at the same time the loudspeaker 40 produces for a short period of time a disagreeable squeaking or whistling sound as an incentive to the animal to leave the closet type of device 9.

It should be noted that the inventive idea is not limited to the use of a closet type of device provided with the further described features in combination with an open or a closed loose house, but, alternatively, the closet type of device 9 may be of a movable structure, such as e.g. a closet type of device 9 on wheels which are adjustable in height; the closet type of device can be moved by a tractor to a predetermined location in a pasture. After the closet type of device has been placed in position, the wheels on both sides thereof are moved upwardly, so that the floor of the closet type of device is flush with the pasture level. The supply of energy of such a closet type of device 9 positioned in a pasture can be effected by a power supply cable, but, alternatively, by means of a solar energy system in combination with batteries. At the location in the pasture where the closet type of device 9 is placed, a dung pit can be dug in such a manner that it is contiguous to the grid floor 19.

## Claims

1. An accommodation (1) for dairy animals such as cows, comprising a closet type of device (9) with an automatic milking apparatus (26) and a feeding system (15), said closet type of device (9) being connected to a storage place (25) for storing droppings of animals, said storage place (25) being provided near the accommodation (1), the closet type of device (9) having a floor, the rear part of which being structured as a grid floor (19), the closet type of device (9) further being provided with an automatic cleaning device comprising a washing device (22) for cleaning the place (19) of the closet type of device where the droppings are deposited, characterized in that washing device (22) is designed in the form of sprinklers or showers which are electronically controlled and located at a side of the closet type of device (9) and at such a level that water sprinkled during operation of the washing device (22) is directed obliquely rearwardly towards the udder and also towards the rear part of the floor of the closet type of device (9) where the droppings are deposited.

2. An accommodation (1) as claimed in claim 1, characterized in that sensor means (21) are provided to establish whether the animal has deposited its droppings, whereas the washing device (22) is rinsing the place where the droppings are deposited in response to signals from the sensor means (21) indicating that the animal has deposited its droppings.

3. An accommodation (1) as claimed in claim 1 or 2, characterized in that the closet type of device (9) is arranged in such a way that various animals can visit the closet type of device (9) one after another.

4. An accommodation (1) as claimed in any one of the preceding claims, characterized in that the closet type of device (9) is provided with a door (12) through which the animal can enter the closet type of device (9) and with another door (13) through which the animal can leave the closet type of device (9).

## Patentansprüche

1. Unterkunft (1) für Milchvieh, wie z. B. für Kühe, die eine Entsorgungsvorrichtung (9) mit einer automatischen Melkvorrichtung (26) und einer Fütterungsanlage (15) aufweist, wobei die Entsorgungsvorrichtung (9) mit einem nahe der Unterkunft (1) angeordneten Aufnahmeraum (25) zur Aufnahme von tierischen Ausscheidungen verbunden ist, wobei die Entsorgungsvorrichtung (9) einen Boden hat, dessen hinterer Teil als Bodenrost (19) ausgeführt ist, und wobei die Entsorgungsvorrichtung (9) ferner eine automatische Reinigungsvorrichtung mit einer Waschvorrichtung (22) aufweist, um die Stelle (19) der Entsorgungsvorrichtung zu reinigen, an der die Ausscheidungen abgelegt werden,
dadurch gekennzeichnet, daß die Waschvorrichtung (22) als Brause oder Dusche ausgeführt ist, die elektronisch gesteuert und an einer Seite der Entsorgungsvorrichtung (9) in einer solchen Höhe angeordnet ist, daß im Betrieb der Waschvorrichtung (22) versprühtes Wasser schräg nach hinten auf das Euter und auch auf den hinteren Teil des Bodens der Entsorgungsvorrichtung (9) gerichtet ist, wo die Ausscheidungen abgelegt werden.

2. Unterkunft (1) nach Anspruch 1,
gekennzeichnet durch Sensoren (21) zur Feststellung der Ablage von Ausscheidungen des Tieres, wobei die Waschvorrichtung (22) als Antwort auf die von den Sensoren (21) gelieferten Signale, die die Ablage der Ausscheidungen des Tieres anzeigen, die Stelle, an der die Ausscheidungen abgelegt worden sind, spült.

3. Unterkunft (1) nach Anspruch 1 oder 2,
dadurch gekennzeichnet, daß die Entsorgungsvorrichtung (9) derart angeordnet ist, daß verschiedene Tiere die Entsorgungsvorrichtung (9) nacheinander aufsuchen können.

4. Unterkunft (1) nach einem der vorhergehenden Ansprüche,
dadurch gekennzeichnet, daß die Entsorgungsvorrichtung (9) eine Tür (12) aufweist, durch die das Tier die Entsorgungsvorrichtung (9) betreten kann, sowie eine weitere Tür (13), durch die das Tier die Entsorgungsvorrichtung (9) verlassen kann.

## Revendications

1. Lieu de séjour (1) pour des animaux laitiers tels que des vaches, comprenant un local sanitaire (9) avec une machine à traire automatique (26) et un système d'apport de nourriture (15), ledit local sanitaire (9) étant relié à un réceptacle (25) pour les déjections des animaux, ce réceptacle (25) étant prévu près du lieu de séjour (1), le local sanitaire (9) ayant un plancher dont la partie postérieure est sous la forme d'un plancher à claire-voie (19), le local sanitaire (9) étant muni en outre d'un dispositif de nettoyage (22) pour nettoyer l'endroit (19) du local sanitaire où se déposent les déjections,
**caractérisé** en ce que le dispositif de lavage (22) est conçu sous la forme de diffuseurs ou de douches à commande électronique, situés sur un côté du local sanitaire (9) à un niveau tel que l'eau pulvérisée pendant le fonctionnement du dispositif de lavage (22) est dirigée en oblique vers l'arrière en direction du pis et aussi vers la partie postérieure du plancher du local sanitaire (9) où sont déposées les déjections.

2. Lieu de séjour selon la revendication 1, caractérisé en ce que des moyens de détection (21) sont prévus pour déterminer si l'animal a déposé ses déjections, tandis que le dispositif de lavage (22) rince l'endroit où sont déposées les déjections en réponse à des signaux venant des moyens de détection (21) indiquant que l'animal a déposé ses déjections.

3. Lieu de séjour (1) selon la revendication 1 ou 2, caractérisé en ce que le local sanitaire (9) est aménagé de telle manière que divers animaux peuvent se rendre dans ce local sanitaire (9) l'un après l'autre.

4. Lieu de séjour (1) selon l'une quelconque des revendications précédentes, caractérisé en ce que le local sanitaire (9) est muni d'une porte (12) par laquelle l'animal peut entrer dans le local sanitaire (9) et d'une autre porte (13) par laquelle l'animal peut sortir du local sanitaire (9).
